# EUROPEAN PATENT SPECIFICATION

(11) **EP 4 306 323 B1**
(45) Date of publication and mention of the grant of the patent: **11.11.2026**
(21) Application number: 21930219.7
(22) Date of filing: 12.03.2021
(51) Int. Cl.: B41J 2/01, B41J 2/045

(54) **IMAGE FORMING APPARATUS AND IMAGE FORMING METHOD**
BILDERZEUGUNGSVORRICHTUNG UND BILDERZEUGUNGSVERFAHREN
APPAREIL DE FORMATION D'IMAGE ET PROCÉDÉ DE FORMATION D'IMAGE

(43) Date of publication of application: 17.01.2024
(73) Proprietor: KONICA MINOLTA, INC., Tokyo 100-7015 (JP)
(72) Inventor: KURAMOCHI, Shouhei, Tokyo 100-7015 (JP); OSADA, Kohei, Tokyo 100-7015 (JP)
(74) Representative: MFG Patentanwälte Meyer-Wildhagen Meggle-Freund Gerhard PartG mbB
(86) International application number: PCT/JP2021/010124
(87) International publication number: WO 2022/190367

(56) References cited:
- JP-A- 2011 131 429
- JP-A- 2014 180 804
- JP-A- 2015 226 994
- JP-A- 2016 210 194
- JP-A- H06 127 032
- US-A1- 2004 051 747
- US-A1- 2015 165 765
- US-A1- 2018 281 448
- US-B1- 6 315 378

## Description

### Technical Field

The present disclosure relates to an image forming apparatus and an image forming method.

### Background Art

Conventionally, an inkjet printing apparatus (image forming apparatus) forms an image on a recording medium by alternately repeating a step of forming an image by ejecting ink from a large number of nozzles formed in a print head while moving the print head in a scanning direction in a state where the recording medium is stopped, and a step of gradually moving the recording medium in a direction different from the scanning direction.

Patent Literature 1 discloses an inkjet printer that improves print image quality by appropriately correcting an error in a paper feed amount for moving paper as a recording medium in an interlace recording mode. Patent Literature 2 describes a printing apparatus according to the preamble of claims 1 and 5 for printing by recording ink dots on a print medium while moving a print head group in a main scan direction. In the printing apparatus closer to a center in the sub-scan direction a nozzle is, greater a recording-target pixel rate is set for the nozzle among the plurality of nozzles on each of the print head. The recording-target pixel rate being a rate of pixels in which the nozzle is in charge of a formation of a dot while the nozzle among the plurality of nozzles passing over one raster line.

Patent Literature 3 describes an image formation device that includes a plurality of first nozzles which eject a first ink, a plurality of second nozzles which eject a second ink, a processor which forms an image of a resolution R [dpi] on the basis of print data, and a memory which stores computer-readable instructions that, when executed by the processor, perform a process including performing an ejection control, when printing of adjacent D×R pixels is performed by the first ink at a high density Ph [%] that is higher than a unit density Pu [%], such that total densities of the second ink ejected onto each of the pixels in the pixel array by the plurality of times of scanning are, respectively, substantially the same as a maximum density of the second ink able to be ejected at one time from the second nozzles.

Patent Literature 4 describes a printing apparatus that performs the steps of computing a shift value of each ejection port in accordance with the thermally-expanded width of a print head, dividing the shift value by a nozzle pitch, using the ejection port which number is minimum among ejection ports having the same integer value of the above quotient as a boundary position, using the print data printed at the boundary position as the logical sum between data for two consecutive ejection ports, and printing each of print data values for ejection ports having the same quotient integer value as the boundary position as the print data for an ejection port number obtained by adding the quotient integer value to the ejection port number of its own.

### Citation List

### Patent Literature

Patent Literature 1: JP 2003-011344 A
Patent Literature 2: US 2004/051747 A1
Patent Literature 3: US 2018/281448 A1
Patent Literature 4: US 6 315 378 B1

### Summary of Invention

### Technical Problem

Due to quality variations and the like at the time of production of print heads, defects of the nozzles may occur, for example, an ejection amount and an ejection direction of ink from the nozzles are not stable, ink is not ejected from a specific nozzle due to clogging of the nozzle, or the like. Image quality may be degraded when an image is formed using a print head having such defective nozzles. As a method for improving such deterioration in image quality, multi-pass printing is widely used.

The multi-pass printing is a printing method in which a nozzle column including a plurality of nozzles is divided into a plurality of columns by the number of passes, and an image is formed in stages by sequentially ejecting ink from the plurality of printing nozzle columns for each divided region. According to such a method, even if the ejection amount and the ejection direction of the ink from a specific nozzle are not stable or the ink is not ejected from the specific nozzle, since the ink ejected from nozzles in which such a defect does not occur is applied in an overlapping manner, an image with suppressed image quality degradation can be obtained.

However, even if the multi-pass printing is employed, it may be difficult to suppress image quality deterioration. Due to quality variations and the like during the production of the print heads, the distance from the active nozzle at one end to the active nozzle at the other end in a nozzle column direction (distance between nozzle ends) may be different for each print head. The effective nozzle means a nozzle that ejects ink, unlike a dummy nozzle that does not eject ink. In such a case, if adjacent pixels are printed using print heads having different distances between the nozzle ends, the interval between the adjacent pixels may deviate from the original positions, and the image quality may deteriorate. Such a deviation occurs in units of regions divided by the number of passes, and thus it is difficult to eliminate the deviation by the technique disclosed in Patent Literature 1.

An object of the present disclosure is to provide an image forming apparatus and an image forming method capable of preventing deterioration in quality of a print result even when a distance between nozzle ends in a nozzle column of a print head is different for each of a plurality of print heads.

### Solutions to Problem

According to a first aspect, the present invention provides an image forming apparatus according to independent claim 1. According to a second aspect, the present invention provides an image forming method according to independent claim 5. Further aspects of the present invention are set forth in the dependent claims, the drawings and the following description.

### Advantageous Effects of Invention

According to the present disclosure, even when the distance between nozzle ends in a nozzle column of a print head is different for each of a plurality of print heads, deterioration of quality of a print result can be prevented. Brief Description of Drawings

Fig. 1 is a top view illustrating a main configuration of an image forming apparatus according to an embodiment of the present disclosure.
Fig. 2 is a view illustrating an example of a configuration of a print head.
Fig. 3 is a view for describing a positional relationship of print heads.
Fig. 4A is a view illustrating an example in which one print head has two nozzle columns.
Fig. 4B is a view illustrating an example in which a plurality of head chip modules is arranged in one print head.
Fig. 4C is a view illustrating an example in which a plurality of head chip modules is arranged in one print head.
Fig. 5 is a diagram for describing an operation of general multi-pass printing.
Fig. 6 is a diagram for describing a state in which intervals between columns of pixels are not uniform when there is a variation in print width for each print head in general multi-pass printing.
Fig. 7 is a diagram for describing a first printing operation by the image forming apparatus.
Fig. 8 is a diagram for describing a second printing operation by the image forming apparatus.
Fig. 9 is a diagram for describing a state in which an image region Ry1 and an image region Ry2 overlap each other in the vicinity of an end.
Fig. 10A is a diagram illustrating a state in which ink ejected from each nozzle of the print head is ejected so as to narrow inward.
Fig. 10B is a diagram illustrating a state in which ink ejected from each nozzle of the print head is ejected so as to spread outward.
Fig. 11 is a diagram for describing a third printing operation by the image forming apparatus.

### Description of Embodiments

Hereinafter, an image forming apparatus according to an embodiment of the present disclosure will be described.

### <Configuration of Image Forming Apparatus>

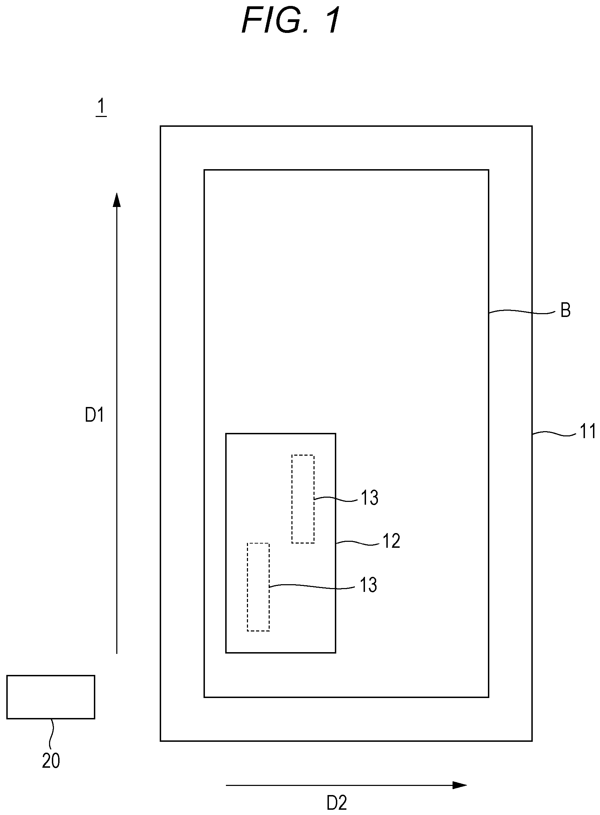

Fig. 1 is a top view illustrating a main configuration of an image forming apparatus 1 according to an embodiment of the present disclosure. The image forming apparatus 1 includes a conveyance table 11, a carriage 12, a print head 13, and a control unit 20. Fig. 1 is a schematic view, and the size of each configuration is exaggerated differently from the actual configuration. In the following description, a front side of the drawing of Fig. 1 is an upper side, and a back side of the drawing is a lower side.

The conveyance table 11 is configured to move a recording medium B on which an image is to be formed by the image forming apparatus 1 along a first direction D1. In the present embodiment, the recording medium B is, for example, a substrate used for a printed circuit board (PCB). For example, the recording medium B is preferably copper-clad laminates of all grades (such as FR-4) using materials of copper-clad laminates for highfrequency circuits or the like, such as paper phenol, paper epoxy, glass cloth epoxy, glass polyimide, glass cloth/nonwoven epoxy, glass cloth/paper epoxy, synthetic fiber epoxy, fluorine, polyethylene, PPO, or cyanate ester, and a polyimide film, a PET film, a glass substrate, a ceramic substrate, a wafer plate, a stainless steel plate, and the like.

The carriage 12 is provided with a plurality of print heads 13 and ink tanks corresponding to the respective print heads 13. Further, the carriage 12 is provided with a position sensor (not illustrated) for reading a relative position with respect to the recording medium B. The carriage 12 is arranged above (on the front side of the sheet of Fig. 1) the conveyance table 11 and the recording medium B so that nozzles 30 of the print head 13 described later face the recording medium B.

Further, the carriage 12 is supported by a support unit (not illustrated) so as to be movable along a second direction D2.

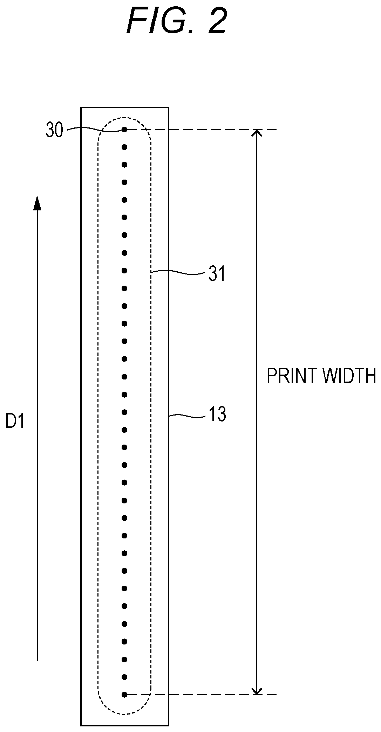

Each print head 13 has a plurality of nozzles 30 for ejecting ink droplets. Note that, in the following description, causing the nozzle 30 to ejecting ink droplets may be simply referred to as ejecting ink. Fig. 2 is a view illustrating an example of a configuration of the print head 13. In the example illustrated in Fig. 2, the plurality of nozzles 30 is arranged in a line to form a nozzle column 31. Fig. 2 is a schematic view, and the number of nozzles 30 provided in the print head 13 is different from the actual number.

In the present embodiment, the ink is, for example, an ink containing a coating agent for manufacturing printed wiring, an insulating material, and the like. Each of the plurality of nozzles 30 included in the plurality of print heads 13 is loaded with a single ink. Examples of single inks include solder resist inks for circuit formation on PCB substrates, for example.

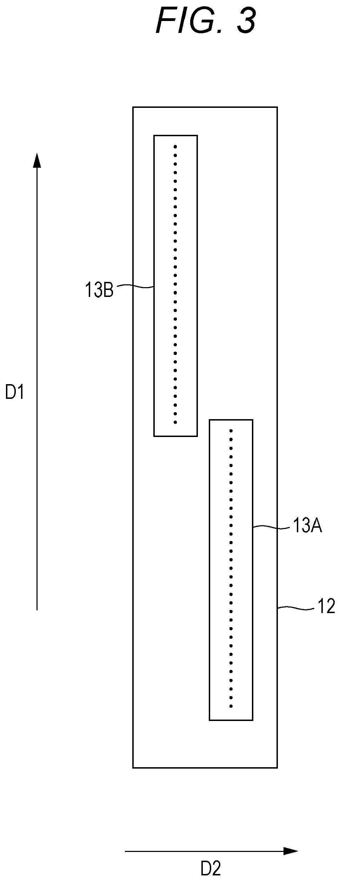

The plurality of print heads 13 is attached to the carriage 12 so that the plurality of nozzles 30 included in each is arranged along the first direction D1. In the present embodiment, as illustrated in Fig. 3, two print heads 13 of print heads 13A and 13B are attached to the carriage 12.

Fig. 3 is a view for describing a positional relationship of the print heads 13A and 13B. Fig. 3 is a view of the carriage 12 as viewed from the lower side, that is, from the recording medium B side in Fig. 1. In the present embodiment, as illustrated in Fig. 3, the print head 13A and the print head 13B are arranged in a state of being deviated from each other in the second direction D2.

The control unit 20 forms an image on the surface of the recording medium B by controlling each configuration described above. Specifically, the control unit 20 causes the print head 13 to eject ink to the recording medium B while causing the print head 13 to move in the second direction D2 with respect to the recording medium B. Thereafter, the control unit 20 causes the conveyance table 11 to move in the first direction D1 by a predetermined distance, and causes the print head 13 to eject ink onto the recording medium B while causing the print head 13 to move in the second direction D2 with respect to the recording medium B again. By repeating this, the image is formed on the recording medium B.

The main configuration of the image forming apparatus 1 according to the embodiment of the present disclosure has been described above. However, the above description is an example of the configuration of the image forming apparatus 1, and the present disclosure is not limited thereto. For example, the conveyance table 11 may be caused to move in the second direction D2 with respect to the print head 13, the print head 13 may be caused to eject the ink along with the movement of the conveyance table 11, and the print head 13 may be caused to move in the first direction D1 each time the movement is completed. Further, the print head 13 may be fixed, and the conveyance table 11 may be caused to move in the second direction D2 with respect to the print head 13, and may be caused to move in the first direction D1 each time the movement is completed. Furthermore, both the print head 13 and the conveyance table 11 may be caused to move in the second direction D2, and both the print head 13 and the conveyance table 11 may be moved in the first direction D1 each time the movement is completed.

Further, in Figs. 2 and 3, an example in which each print head 13 includes only the nozzle column 31 for one column has been illustrated, but each print head 13 may include, for example, a plurality of nozzle columns 31.

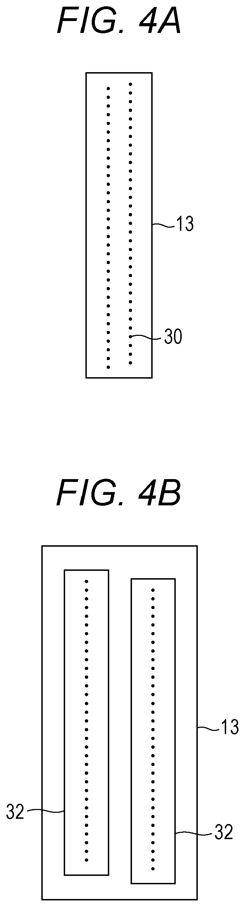

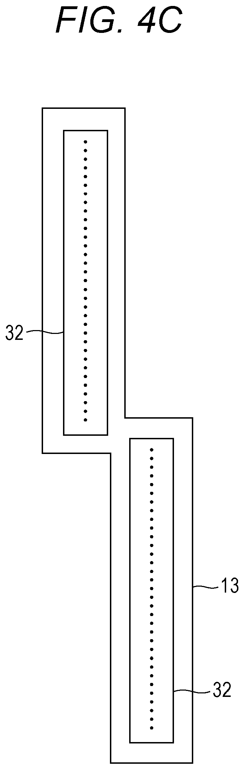

Fig. 4A is a view illustrating an example in which one print head 13 has two nozzle columns 31. Further, as in the example illustrated in Figs. 4B and 4C, a plurality of head chip modules 32 may be arranged in one print head 13. The head chip modules 32 are each obtained by arranging and modularizing a plurality of print chips. In an example illustrated in Fig. 4B, two head chip modules 32 are arranged side by side along the second direction D2 to improve resolution. In an example illustrated in Fig. 4C, the two head chip modules 32 are arranged to be deviated from each other along the first direction D1 to enlarge a region where the print head 13 can print at a time.

### <Printing Operation>

Hereinafter, a printing operation of the image forming apparatus 1 according to the embodiment of the present disclosure will be described in comparison with a general multi-pass printing operation.

### [General Multi-pass Printing Operation]

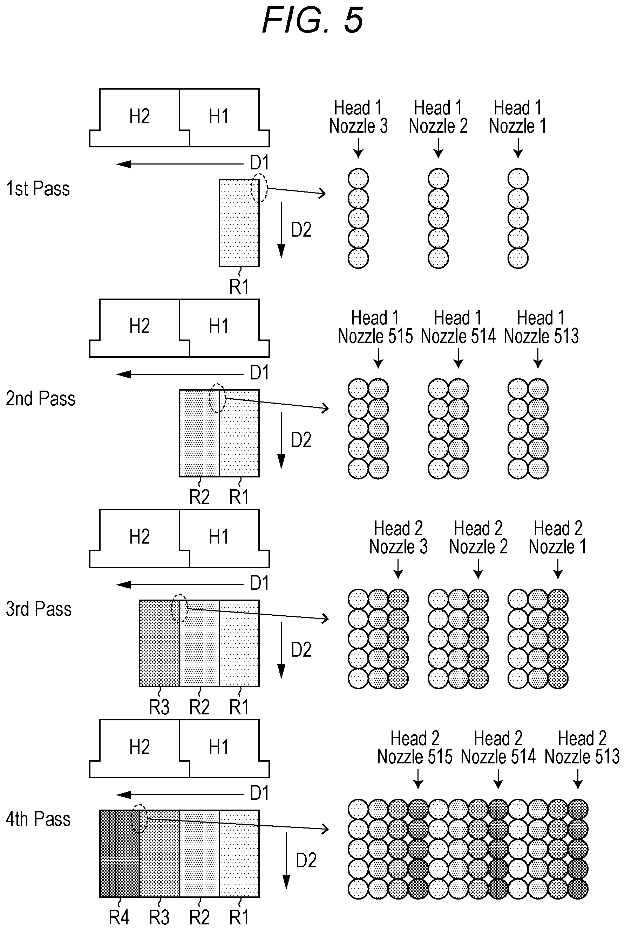

First, the operation of general multi-pass printing will be described. As an example, a case of forming an image with a printing resolution of 1440 dpi by performing 4-pass multi-pass printing using a print head with a nozzle density of 360 dpi will be described. Fig. 5 is a diagram for describing an operation of the general multi-pass printing.

The left side of Fig. 5 illustrates a schematic diagram illustrating, in time series, a positional relationship between two print heads H1 and H2 integrally configured and image regions R1 to R4 formed on a recording medium in the general multi-pass printing. The right side of Fig. 5 illustrates enlarged states of regions surrounded by broken lines of the image regions R1 to R4 illustrated on the left side of Fig. 5.

In the following description, it is assumed that the nozzle column of one print head is configured by arranging 1024 nozzles in a column. Further, in the following description, a distance between nozzle ends in a nozzle column direction is referred to as a print width. In the example illustrated in Fig. 5, the print width of the print head is 72.1 ± 0.02 mm. ±0.02 mm is a variation at the time of manufacturing the print head. In the following description, a nozzle arranged at one end portion in each nozzle column is referred to as a first nozzle, and a nozzle arranged at the other end portion is referred to as a 1024th nozzle.

First, printing of the first pass is performed by the first to 512th nozzles of the first print head H1. More specifically, in a state where the recording medium is stationary, the first and second print heads H1 and H2 move along the second direction D2 while ejecting the ink from the first to 512th nozzles of the first print head H1. Thus, as illustrated in Fig. 5, the first image region R1 is formed. The first image region R1 at the time when the printing operation of the first pass is completed is formed by columns of pixels for 512 columns spaced apart by an interval between the nozzles 30 (hereinafter, it is described as a nozzle pitch). Note that, in the enlarged view on the right side of Fig. 5, which nozzle of which print head forms each column of pixels is indicated as "Head 1 Nozzle 1". "Head 1 Nozzle 1" indicates a column formed by the first nozzle of the first head H1.

Next, printing of the second pass is performed. More specifically, after the recording medium is moved by a predetermined amount along the first direction D1, the first and second print heads H1 and H2 move along the second direction D2 while ejecting ink from the first to 1024th nozzles of the first print head H1 in a state where the recording medium is stationary. Thus, in the second image region R2 at the time when the printing operation of the second pass is completed, as illustrated in Fig. 5, columns of pixels for 512 columns are newly formed by the 513th to 1024th nozzles of the first print head adjacent to the column of pixels formed in the first pass. Then, adjacent to the second image region R2, the first image region R1 including columns of pixels for 512 columns is newly formed by the first to 512th nozzles of the first print head.

The moving amount (hereinafter, it is described as a feed amount) of moving the recording medium is an amount at which the first and second print heads H1 and H2 are to form the next image. In the example illustrated in Fig. 5, a value (in the following description, it is described as an inter-pixel distance) corresponding to the interval between the pixels along the first direction D1 is added to the 512 nozzle pitches. That is, (512 nozzle pitches + one inter-pixel distance) is the feed amount. As a specific example, the feed amount is 36.10 mm.

Next, printing of the third pass is performed. More specifically, after the recording medium is fed by a predetermined amount along the first direction D1, the first and second print heads H1 and H2 move along the second direction D2 while ejecting ink from the first to 1024th nozzles of the first print head H1 and the first to 512th nozzles of the second print head H2 in a state where the recording medium is stationary.

Thus, in the third image region R3 at the time when the printing operation of the third pass is completed, as illustrated in Fig. 5, columns of pixels for 512 columns are newly formed by the first to 512th nozzles of the second print head H2 further adjacent to the column of pixels formed up to the second pass. In the second image region R2 at the time when the printing operation of the third pass is completed, although not illustrated, columns of pixels for 512 columns are formed by the 513th to 1024th nozzles of the first print head adjacent to the column of pixels formed up to the second pass. Furthermore, adjacent to the second image region R2, the first image region R1 including columns of pixels for 512 columns is newly formed by the first to 512th nozzles of the first print head H1.

The feed amount of the recording medium in the second to third passes is 36.15 mm, which is the same as the feed amount in the first to second passes.

Next, printing of the fourth pass is performed. More specifically, after the recording medium is fed by a predetermined amount along the first direction D1, the first and second print heads H1 and H2 move along the second direction D2 while ejecting ink from the first to 1024th nozzles of the first print head H1 and the first to 1024th nozzles of the second print head H2, that is, all the nozzles of the first and second print heads H1 and H2 in a state where the recording medium is stationary.

Thus, in the fourth image region R4 at the time when the printing operation of the fourth pass is completed, as illustrated in Fig. 5, columns of pixels for 512 columns are newly formed by the 513th to 1024th nozzles of the second print head H2 further adjacent to the column of pixels formed up to the third pass. Thus, at the time when the printing operation of the fourth pass is completed, all the intervals corresponding to the nozzle pitch are filled, and the image formation in the fourth image region R4 is completed.

In the third image region R3 at the time when the printing operation of the fourth pass is completed, although not illustrated, columns of pixels for 512 columns are formed by the first to 512th nozzles of the second print head H2 further adjacent to the column of pixels formed up to the third pass. In the second image region R2 at the time when the printing operation of the fourth pass is completed, although not illustrated, columns of pixels for 512 columns are formed by the 513th to 1024th nozzles of the first print head H1 further adjacent to the column of pixels formed up to the third pass. Furthermore, adjacent to the second image region R2, the first image region R1 including columns of pixels for 512 columns is newly formed by the first to 512th nozzles of the first print head H1.

The feed amount of the recording medium B from the third pass to the fourth pass is 36.15 mm, which is the same as the feed amount up to the third pass.

Thereafter, although not illustrated, the same operation as in the first to fourth passes is repeated until the entire image formed on the recording medium is completed.

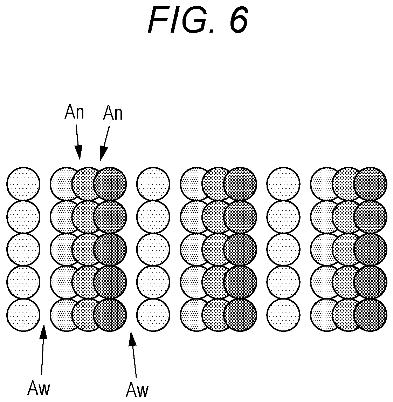

In the general multi-pass printing as described above, when there is a variation in the print width for each print head, the intervals between the pixel columns may not be uniform. Fig. 6 is a diagram for describing a state in which intervals between columns of pixels are not uniform when there is a variation in print width for each of the print heads in the general multi-pass printing. Fig. 6 illustrates a positional deviation of the pixel column in an exaggerated manner.

For example, it is assumed that the print width of the first print head H1 is 72.08 mm and the print width of the second print head H2 is 72.12 mm. In this case, even if the recording medium is fed by the same feed amount with respect to the print heads H1 and H2, the position of each nozzle of each of the print heads H1 and H2 with respect to the recording medium deviates from the original position. For this reason, as illustrated in Fig. 6, a position Aw in which the interval between the pixel columns becomes wide and a position An in which the interval becomes conversely narrow may occur due to the variation in the print width for each of the print heads H1 and H2. In a case where a wiring portion or the like of a PCB is printed using the image forming apparatus 1, such positional deviation of a pixel column may be a serious defect.

Accordingly, in the image forming apparatus 1 according to the embodiment of the present disclosure, the positional deviation of the pixels can be reduced by the following operation even if there is a variation in the print width for each print head.

### [First Printing Operation by Image Forming Apparatus 1]

First, a first printing operation by the image forming apparatus 1 will be described in detail. In the following description, a case of forming an image with a printing resolution of 1440 dpi by performing 4-pass multi-pass printing using a print head with a nozzle density of 360 dpi similarly to the general multi-pass printing operation described above will be described.

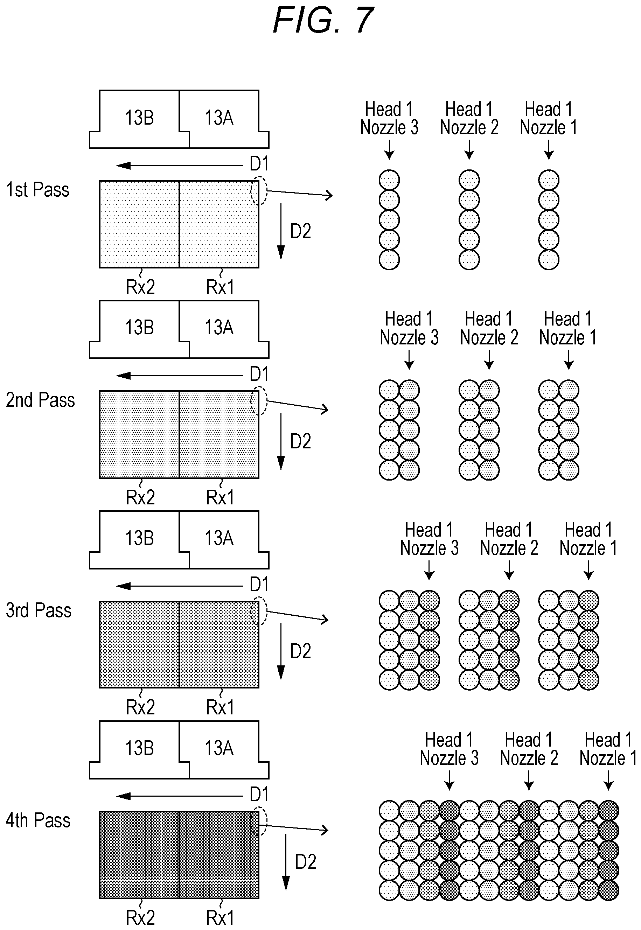

Fig. 7 is a diagram for describing a first printing operation by the image forming apparatus 1. The left side of Fig. 7 illustrates a schematic diagram illustrating a positional relationship between the two print heads 13A and 13B and image regions Rx1 and Rx2 formed on the recording medium B in time series in the first printing operation by the image forming apparatus 1. The right side of Fig. 7 illustrates enlarged states of regions surrounded by broken lines of the image regions Rx1 and Rx2 illustrated on the left side of Fig. 7.

First, the control unit 20 performs the printing of the first pass using the first to 1024th nozzles of the print head 13A and the first to 1024th nozzles of the print head 13B, that is, all the nozzles. More specifically, in a state where the recording medium is stationary, the control unit 20 causes the print heads 13A and 13B to move along the second direction D2 while ejecting the ink using all the nozzles 30 of the print heads 13A and 13B. Thus, as illustrated in Fig. 7, the image region Rx1 formed only by the nozzles 30 included in the print head 13A and the image region Rx2 formed only by the nozzles 30 included in the print head 13B are formed adjacent to each other. Although partially omitted in Fig. 7, the image regions Rx1 and Rx2 at the time when the printing operation of the first pass is completed are each formed by columns of pixels for 1024 columns spaced apart by an interval of the nozzle pitch.

Next, the control unit 20 performs printing of the second pass. More specifically, after the recording medium B is fed by a predetermined amount along the first direction, in a state where the recording medium B is stationary, the control unit 20 causes the print heads 13A and 13B to move along the second direction while ejecting ink from all the nozzles of the print heads 13A and 13B. Although partially omitted in Fig. 7, in each of the image regions Rx1 and Rx2 at the time when the printing operation of the second pass is completed, a new column of pixels is newly formed adjacent to the column of pixels formed up to the first pass.

In the first printing operation, the feed amount of the recording medium B is a distance between pixels (inter-pixel distance) along the first direction formed on the recording medium B. That is, in the first printing operation, the control unit 20 causes the recording medium B to move along the first direction D1 by one inter-pixel distance. The inter-pixel distance is determined by the nozzle pitch and the number of passes. When the nozzle pitch is 70.4 µm and the pass number is 4, the feed amount of the first printing operation is 17.6 µm. The feed amount only needs to be determined by the control unit 20 before the start of the printing operation or at the start of the printing operation, and stored in a storage unit (not illustrated) or the like.

Next, printing of the third pass and the fourth pass is sequentially performed. The printing operation in the third pass and the fourth pass is substantially similar to the printing operation in the second pass. By the printing operation of the fourth pass, all the intervals corresponding to the nozzle pitch are filled, and the image formation in each of the image regions Rx1 and Rx2 is completed. Thereafter, the control unit 20 feeds the recording medium B until the print heads 13A and 13B reach the position where the next image is to be formed, and then the printing operation of the fifth and subsequent passes in the new image region is started.

The feed amount of the recording medium B until the print heads 13A and 13B reach the position where the next image is to be formed is a value obtained by adding the sum of the print widths of the print heads 13A and 13B and the sum of one nozzle pitch of each of the print heads 13A and 13B. As a specific example, the feed amount of the fifth pass is 144.3410 mm. By repeating such a printing operation, the entire image to be formed on the recording medium B is formed.

Note that the feed amount of the recording medium B until the print heads 13A and 13B reach the position where the next image is to be formed is not limited to the above. For example, in order to make the joint between the image formed by the printing operation up to the fourth pass and the image formed by the printing operation in the fifth and subsequent passes inconspicuous, the feed amount may be made slightly smaller than the value (144.3410 mm) described above.

According to the first printing operation described above, the image region Rx1 formed only by the nozzles 30 included in the print head 13A and the image region Rx2 formed only by the nozzles 30 included in the print head 13B are formed adjacent to each other on the recording medium B. Therefore, in each of the image regions Rx1 and Rx2 formed by the first printing operation, the pixels formed by the nozzles 30 included in the print head 13A and the pixels formed by the nozzles 30 included in the print head 13B are not mixed. Accordingly, at least inside the image regions Rx1 and Rx2, it is possible to suppress an adverse effect (positional deviation) due to the difference in the respective print widths of the print heads 13A and 13B to be small. Specifically, the positional deviation due to the difference in the respective print widths of the print heads 13A and 13B can be suppressed to about half the difference in one nozzle pitch between the print head 13A and the print head 13B. For example, when the print width of the print head 13A is 72.08 mm and the print width of the print head 13B is 72.12 mm, according to the first printing operation of the present disclosure, the positional deviation due to the difference in the respective print widths of the print heads 13A and 13B can be about 0.02 µm. Accordingly, even when the respective print widths of the print heads 13A and 13B are different from each other, the image forming apparatus 1 can form an image with a reduced adverse effect due to the difference in the print widths.

With such a configuration, for example, in an application of printing a solder resist ink for circuit formation on a PCB substrate, even when print widths of a plurality of print heads are different, positional deviation of a print result can be minimized. Accordingly, it is possible to effectively prevent the positional deviation of the print result from causing a serious defect during the circuit formation of the PCB substrate.

### [Second printing operation by image forming apparatus 1]

Next, a second printing operation by the image forming apparatus 1 will be described in detail. In the following description, a case of forming an image with a printing resolution of 1440 dpi by performing 4-pass multi-pass printing using a print head with a nozzle density of 360 dpi similarly to the general multi-pass printing operation and the first printing operation will be described.

In the first printing operation described above, the feed amount of the recording medium B between passes is the inter-pixel distance in the first direction D1, but in the second printing operation described below, the feed amount is larger than the inter-pixel distance.

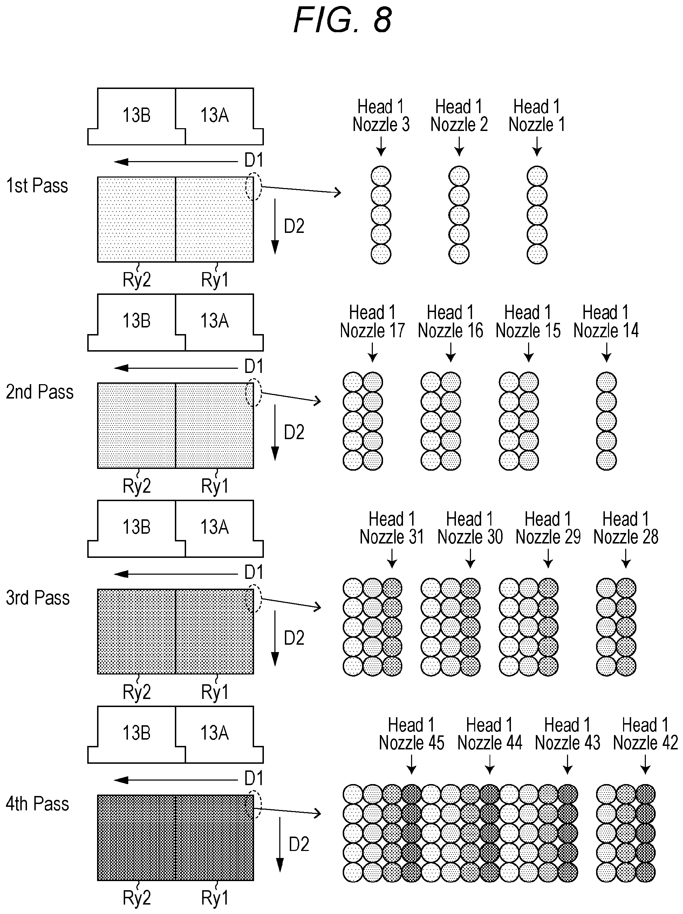

Fig. 8 is a diagram for describing a second printing operation by the image forming apparatus 1. The left side of Fig. 8 illustrates a schematic diagram illustrating a positional relationship between the two print heads 13A and 13B and image regions Ry1 and Ry2 formed on the recording medium B in time series in the second printing operation by the image forming apparatus 1. The right side of Fig. 8 illustrates enlarged states of regions surrounded by broken lines of the image regions Ry1 and Ry2 illustrated on the left side of Fig. 8.

The control unit 20 performs the printing of the first pass using the first to 1024th nozzles 30 of the print head 13A and the first to 1024th nozzles 30 of the print head 13B, that is, all the nozzles 30 of the print heads 13A and 13B. More specifically, in a state where the recording medium B is stationary, the control unit 20 causes the print heads 13A and 13B to move along the second direction D2 while ejecting the ink using all the nozzles 30 of the print heads 13A and 13B. Thus, as illustrated in Fig. 8, the image region Ry1 formed only by the nozzles 30 included in the print head 13A and the image region Ry2 formed only by the nozzles 30 included in the print head 13B are formed adjacent to each other. Although partially omitted in Fig. 8, the image region Ry1 at the time when the printing operation of the first pass is completed is formed by columns of pixels for 1024 columns spaced apart by an interval of the nozzle pitch. Further, although not illustrated, the image region Ry2 at the time when the printing operation of the first pass is completed is formed by columns of pixels for 1024 columns spaced apart by an interval of the nozzle pitch.

Next, the control unit 20 performs printing of the second pass. More specifically, after the recording medium B is fed by a predetermined amount along the first direction D 1, the control unit 20 causes the print heads 13A and 13B to move along the second direction D2 while ejecting ink using all the nozzles 30 of the print heads 13A and 13B in a state where the recording medium B is stationary.

In the example illustrated in Fig. 8, the feed amount by which the control unit 20 feeds the recording medium B is (14 nozzle pitches + one inter-pixel distance). In the example illustrated in Fig. 8, the feed amount is 1.004 mm. Thus, as illustrated in Fig. 8, in the second pass, the 15th nozzle 30 of the print head 13A forms a new pixel column at a position adjacent to the pixel column formed by the first nozzle 30 of the print head 13A in the first pass. Then, in the second pass, the 14th nozzle 30 of the print head 13A forms a column of pixels not at a position adjacent to the column of pixels formed by the 1st nozzle 30 of the print head 13A in the first pass, but at a position separated on the opposite side to the first direction D1 by (one nozzle pitch + one inter-pixel distance).

Note that, although not illustrated in Fig. 8, a pixel column by the first to 13th nozzles 30 of the print head 13A is formed on the further right side of the pixel column formed by the 14th nozzle 30 illustrated in Fig. 8. The pixel column formed by the first to 14th nozzles 30 of the print head 13A is not adjacent to the pixel column formed in the first pass, and is formed independently.

The feed amount of the recording medium B in the second printing operation only needs to be determined by the control unit 20 before the start of the printing operation or at the start of the printing operation, and stored in a storage unit (not illustrated) or the like.

In the example illustrated in Fig. 8, the feed amount is set to (14 nozzle pitches + one inter-pixel distance). Thus, pixels adjacent along the first direction D1 are formed by the nozzles 30 separated by about 14 nozzle pitches in the same print head 13.

However, in the second printing operation, the amount by which the control unit 20 feeds the recording medium B between passes may not be for the 14 nozzle pitches. In the second printing operation, it is sufficient that the influence of an ejection bend from a specific nozzle 30 on the positions of the adjacent pixels can be reduced, and thus the feed amount of the recording medium B only needs to be appropriately set so that the nozzles 30 separated at a certain distance or more can form the adjacent pixels. As an example, if it is set to 2 to 3 nozzle pitches, such an effect of the second printing operation can be sufficiently obtained. In this case, the control unit 20 only needs to set the feed amount to (2 to 3 nozzle pitches + one inter-pixel distance).

Next, the control unit 20 performs printing of the third pass. More specifically, after the recording medium B is fed by the same amount as the feed amount from the first pass to the second pass along the first direction, the control unit 20 causes the print heads 13A and 13B to move along the second direction while ejecting ink using all the nozzles 30 of the print heads 13A and 13B in a state where the recording medium B is stationary.

Thus, although partially omitted in Fig. 8, in the third pass, a column of pixels by the 15th to 1024th nozzles 30 of the print head 13A and a column of pixels by the first to 1024th nozzles 30 of the print head 13B are newly formed adjacent to the column of pixels formed in the second pass. Although not illustrated, the column of pixels by the first to 14th nozzles 30 of the print head 13A is not adjacent to the column of pixels formed in the second pass and is formed independently.

Furthermore, the control unit 20 performs printing of the fourth pass. More specifically, after the recording medium B is fed by the same amount as the feed amount from the first pass to the second pass along the first direction, the control unit 20 causes the print heads 13A and 13B to move along the second direction while ejecting ink using all the nozzles 30 of the print heads 13A and 13B in a state where the recording medium B is stationary.

Thus, in the fourth pass, the column of pixels by the 15th to 1024th nozzles 30 of the print head 13A and the column of pixels by the first to 1024th nozzles 30 of the print head 13B are newly formed adjacent to the column of pixels formed in the third pass. Although not illustrated, the column of pixels by the first to 14th nozzles 30 of the print head 13A is not adjacent to the column of pixels formed in the third pass, but is formed independently.

As described above, in the second printing operation, in the second to fourth passes, the column of pixels by the first to 14th nozzles 30 of the print head 13A is not formed adjacent to the column of pixels formed in the previous pass. Therefore, at the time when the printing operation up to the fourth pass is completed, the vicinity of the upstream end of the image region Ry1 along the first direction D1 is in a state in which a space is generated in part of the column of pixels. The same applies to the vicinity of the downstream end of the image region Ry2 along the first direction D1.

After the fourth pass is completed, the recording medium B is fed by the control unit 20 until the print heads 13A and 13B reach positions where the next image is to be formed, and then the space is filled in the printing operation in the fifth and subsequent passes in the new image region.

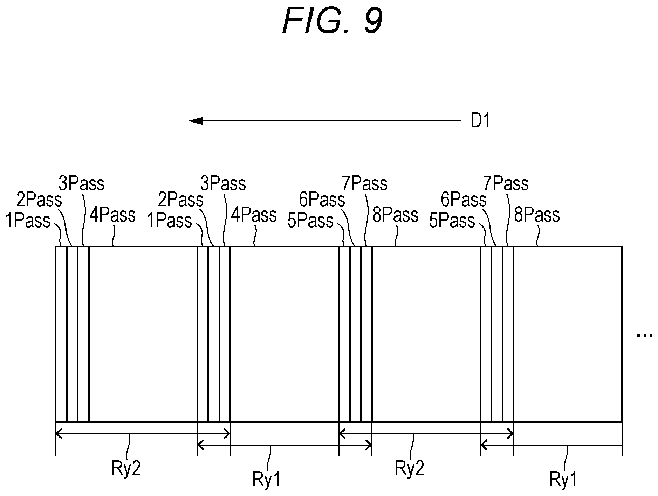

That is, in the second printing operation, the vicinity of the upstream end of the image region Ry1 along the first direction D1 up to the fourth pass partially overlaps the vicinity of the downstream end of the image region Ry2 in the fifth and subsequent passes. Fig. 9 is a diagram for describing a state in which the image region Ry1 and the image region Ry2 overlap each other in the vicinity of an end. Fig. 9 illustrates a state in which the end of the image region Ry1 formed in the first to fourth passes and the end of the image region Ry2 formed in the fifth to eighth passes overlap each other. Note that Fig. 9 exaggeratedly illustrates overlapping positions, and the scale is different from the actual scale.

By such a second printing operation, the image region Ry1 formed only by the nozzles 30 included in the print head 13A and the image region Ry2 formed only by the nozzles 30 included in the print head 13B are formed adjacent to each other on the recording medium B. Therefore, in each of the image regions Ry1 and Ry2 (excluding the vicinity of the end) formed by the second printing operation, the pixel column formed by the nozzles 30 included in the print head 13A and the pixel column formed by the nozzles 30 included in the print head 13B are not mixed. Accordingly, at least inside the image regions Ry1 and Ry2, it is possible to minimize an adverse effect (positional deviation) due to the difference in the respective print widths of the print heads 13A and 13B.

However, in the second printing operation, the feed amount of the recording medium B is larger than in the first printing operation. In other words, in the second printing operation, the column of pixels adjacent along the first direction D1 is formed using the nozzles 30 arranged at positions farther than in the first printing operation in the same print head 13. Thus, the following effects can be obtained.

In the first printing operation, since printing for four passes is performed using the same nozzle 30, four pixels adjacent along the first direction D1 are formed by the same nozzle 30. If there is an ink ejection abnormality (bend, defect, decrease in discharge amount, decrease in discharge speed, and the like) in a specific nozzle 30 of the nozzle column 31, the nozzles 30 in which the ejection abnormality occurs form adjacent four pixels in the first printing operation. The nozzle 30 in which the ejection abnormality occurs causes a landing deviation of the ink, and the landing deviation of the ink causes a positional deviation of the pixel. Accordingly, in the first printing operation, the positional deviation concentrates on the adjacent four pixels formed by the nozzle 30 in which the ejection abnormality occurs.

On the other hand, in the second printing operation, in the same print head 13, four pixels adjacent to each other along the first direction D1 are formed using nozzles at positions slightly separated from each other. That is, the adjacent four pixels are formed by the nozzles 30 different from each other. Accordingly, even if the ejection abnormality occurs in a certain nozzle 30, it is possible to prevent the positional deviation from concentrating on the adjacent four pixels.

However, in the second printing operation, as described above, printing is performed in the vicinity of both ends of the image region Ry1 along the first direction D1 so as to partially overlap the vicinity of both ends of the image region Ry2. In this case, the adjacent pixels are constituted by nozzles at least 14 nozzle pitches ahead, and a positional deviation of the pixels may occur due to a difference between the feed amount of the recording medium B and the nozzle pitches of the print heads 13A and 13B. Specifically, a positional deviation of about 1.1 µm may occur at about (nozzle pitch difference between print heads 13A and 13B) × (14 + 1/4) × 4 ÷ 2.

### [Use of first printing operation and second printing operation]

As described above, the first printing operation and the second printing operation have unique advantages, and are desirably appropriately used according to the purpose. Which one of the first printing operation and the second printing operation is to be performed may be set in advance by the user of the image forming apparatus 1, but the control unit 20 may automatically set which one is to be performed according to the environment in which the image forming apparatus 1 is placed as follows. The difference between the first printing operation and the second printing operation is the feed amount of the recording medium B, and thus, in other words, the control unit 20 only needs to appropriately change the feed amount of the recording medium B in the printing operation according to various conditions as described below.

For example, when no ejection bend has occurred in any of the nozzles 30 of the print heads 13A and 13B, a high-quality image can be formed as a whole by employing the first printing operation (setting the feed amount to the one inter-pixel distance). When an ejection bend has occurred in any of the nozzles of the print heads 13A and 13B, by employing the second printing operation (setting the feed amount to n nozzle pitches + one inter-pixel distance), positional deviation of some pixels may occur in a region where the image regions Ry1 and Ry2 overlap, but concentration of displacement due to the ejection bend of a specific nozzle can be prevented in other regions, so that an image with relatively high quality can be formed as the entire image.

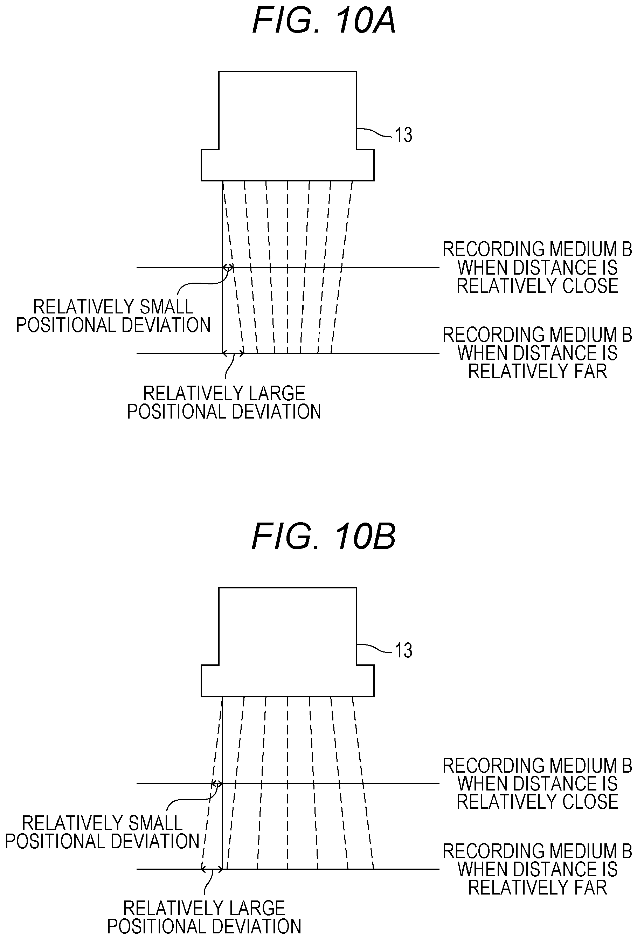

Another example of use of the first printing operation and the second printing operation is as follows. The ejection angle of the entire nozzle 30 may be different depending on the print head 13. Fig. 10A is a diagram illustrating a state in which the ink ejected from each nozzle 30 of the print head 13 is ejected so as to narrow inward. Fig. 10B is a diagram illustrating a state in which the ink ejected from each nozzle 30 of the print head 13 is ejected so as to spread outward. In Figs. 10A and 10B, a broken line indicates the direction of the ejected ink.

As illustrated in Figs. 10A and 10B, in a case where the ink ejected from the nozzle 30 has an angle as the entire print head 13, the landing position of the ink deviates from the target position due to the distance between the nozzle 30 and the recording medium B. This deviation increases as the distance between an ejection port of the nozzles 30 and the recording medium B increases.

Accordingly, the control unit 20 employs the first printing operation when the angle of the ink ejected from the nozzle 30 is larger than a predetermined angle as the entire print head 13 or when the distance between the recording medium B and the ejection port of the nozzle 30 is larger than a predetermined distance. This is because, in the first printing operation, the same nozzle 30 forms adjacent pixels in the image region formed by the same print head 13, and thus, even if the ejection angle of the ink from the nozzle 30 is biased, the influence thereof is smaller as compared with that of the second printing operation.

Furthermore, as another example of the use of the first printing operation and the second printing operation, for example, there are the following. In the image forming apparatus 1 that heats and uses the print head 13, the temperatures of the plurality of print heads 13 may be different from each other. Then, when a temperature difference occurs in the plurality of print heads 13, the distance between the nozzles 30 increases due to thermal expansion, and thus the print width differs in each print head 13.

Even in such a case, it is more preferable to employ the first printing operation. This is because, in the first printing operation, the same nozzle 30 forms adjacent pixels in the image region formed by the same print head 13, and thus the influence of the difference in print width for each print head 13 on the formed image is smaller as compared with that of the second printing operation.

Therefore, the control unit 20 only needs to acquire information regarding the temperature of each print head 13 by, for example, a temperature sensor provided for each print head 13, and forcibly employ the first printing operation when the temperature difference between the print heads 13 is equal to or higher than a predetermined temperature.

### [Third printing operation]

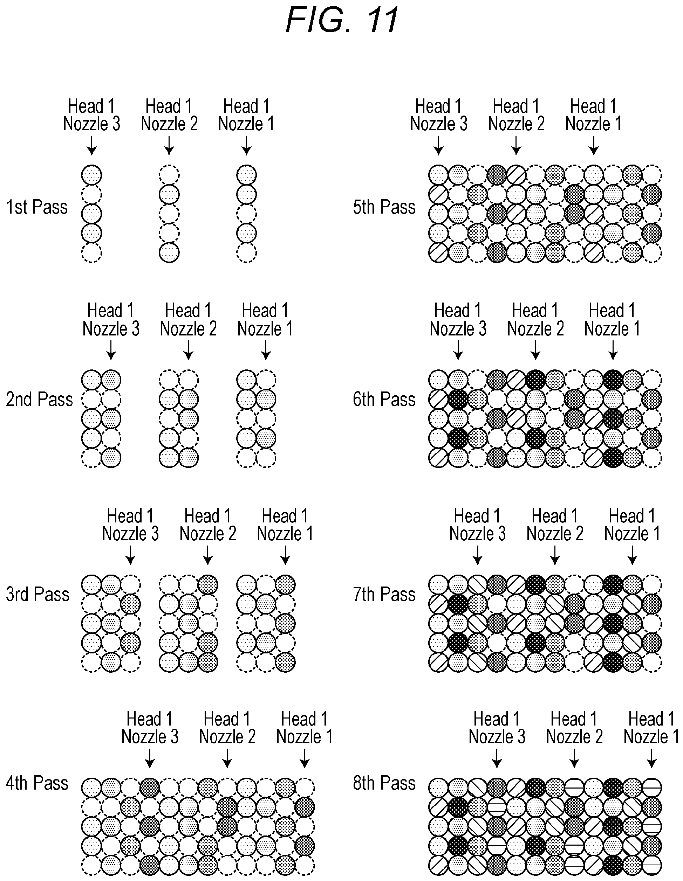

A modification of the first printing operation will be described below as a third printing operation. Fig. 11 is a diagram for describing the third printing operation by the image forming apparatus 1. Fig. 11 illustrates an enlarged schematic view of pixel columns formed by the first to third nozzles 30 of the print head 13A in the first to eighth passes.

The third printing operation is similar to the first printing operation in that adjacent four pixel columns are formed by the same nozzle 30 in the first to fourth passes, but is different from the first printing operation in that not all the pixels included in the pixel column are formed in each pass.

In the third printing operation, not all the pixels in one pixel column are formed in the first to fourth passes, and the remaining pixels in each pixel column are formed in the fifth to eighth passes. The feed amount of the recording medium B up to the fourth pass is an amount corresponding to the one inter-pixel distance as in the first printing operation. From the fourth pass to the fifth pass, the control unit 20 returns the recording medium B to the same position as the pixel column formed by a certain nozzle 30 in the first pass. That is, the control unit 20 performs an operation of returning the recording medium B by three inter-pixel distances. The feed amount of the recording medium B from the fifth pass to the eighth pass is an amount corresponding to the one inter-pixel distance as in the fourth pass.

With such an operation, in the third printing operation, the same pixel column is formed by the same nozzle 30 twice. Accordingly, even in a case where the print widths of the print heads 13A and 13B are different from each other, the influence can be minimized, and by forming the same pixel column at a time, it is possible to reduce generation of streaks between pixel columns adjacent to each other.

### Industrial Applicability

According to the present disclosure, it is possible to provide an image forming apparatus capable of forming a high-quality image.

### Reference Signs List

1 Image forming apparatus
11 Conveyance table
12 Carriage
13, 13A, 13B Print head
20 Control unit
30 Nozzle
31 Nozzle column
32 Head chip module

## Claims

1. An image forming apparatus (1), comprising:
a plurality of print heads (13), each print head (13) having a nozzle column (31) including a plurality of nozzles (30), configured to form an image on the recording medium by ejecting ink droplets from the nozzle column (31); and
a control unit (20), configured to perform control of executing multi-pass printing of forming the image by relatively moving the print heads (13) and the recording medium a plurality of times along a second direction orthogonal to a first direction in which the plurality of nozzles (30) is arranged,
the control unit (20) being configured to perform control to execute the multi-pass printing in such a manner that pixels within one nozzle pitch of the print heads (13) are formed in a plurality of passes by a nozzle column (31) included in a single print head (13) of the print heads (13) in at least a part of the image, wherein the nozzle pitch is arranged in the first direction and
**characterized in that**,
in the control, the control unit (20) is configured to repeat a first operation of relatively moving the print heads (13) along the second direction while ejecting ink from any one of the nozzles (30) of the print heads (13), a second operation of relatively moving the recording medium along the first direction with respect to the print heads (13), and a third operation of relatively moving the recording medium along the first direction with respect to the print heads (13) on a basis of a distance between nozzle ends of the plurality of print heads (13) after printing in at least a partial region in the image is completed.

2. The image forming apparatus (1) according to claim 1, wherein
in the second operation, the control unit (20) is configured to cause the recording medium to relatively move with respect to the print heads (13) by a moving amount equal to or more than one nozzle pitch of the print heads (13) in the first direction.

3. The image forming apparatus (1) according to claim 1, wherein
the control unit (20) is configured to set a moving amount of relative movement of the recording medium with respect to the print heads (13) on a basis of a temperature difference between the plurality of print heads (13).

4. The image forming apparatus (1) according to claim 1, wherein
the control unit (20) is configured to set a moving amount of relative movement of the recording medium with respect to the print heads (13) on a basis of a distance between an ejection port of the nozzles (30) and the recording medium.

5. An image forming method for executing multi-pass printing for forming an image by relatively moving a plurality of print heads (13), each print head (13) having a nozzle column (31) including a plurality of nozzles (30) and a recording medium a plurality of times, the method comprising:
executing the multi-pass printing in such a manner that adjacent pixels constituting the image are formed in a plurality of passes by a nozzle column (31) included in a single print head (13) of the print heads (13), wherein the nozzle pitch is arranged in the first direction and
**characterized by** the multi-pass printing comprising a first operation of relatively moving the print heads (13) along the second direction while ejecting ink from any one of the nozzles (30) of the print heads (13), a second operation of relatively moving the recording medium along the first direction with respect to the print heads (13), and a third operation of relatively moving the recording medium along the first direction with respect to the print heads (13) on a basis of a distance between nozzle ends of the plurality of print heads (13) after printing in at least a partial region in the image is completed.

## Patentansprüche

1. Eine Bilderzeugungsvorrichtung (1), umfassend:
eine Vielzahl von Druckköpfen (13), wobei jeder Druckkopf (13) eine Düsenreihe (31) mit einer Vielzahl von Düsen (30) aufweist, die dazu ausgelegt sind, dass sie durch Ausstoßen von Tintentröpfchen aus der Düsenreihe (31) ein Bild auf dem Aufzeichnungsmedium erzeugen; und
eine Steuereinheit (20), die dazu ausgelegt ist, die Steuerung zur Durchführung eines Mehrpassdrucks auszuführen, bei dem das Bild erzeugt wird, indem die Druckköpfe (13) und das Aufzeichnungsmedium mehrfach relativ zueinander entlang einer zweiten Richtung bewegt werden, die orthogonal zu einer ersten Richtung verläuft, in der die Vielzahl von Düsen (30) angeordnet ist,
wobei die Steuereinheit (20) dazu ausgelegt ist, die Steuerung zur Durchführung des Mehrpassdrucks derart auszuführen, dass in mindestens einem Teil des Bildes Pixel, die innerhalb eines Düsenabstands der Druckköpfe (13) liegen, im Verlauf mehrerer Durchgänge durch eine Düsenreihe (31) erzeugt werden, die in einem einzelnen Druckkopf (13) von den Druckköpfen (13) enthalten ist, wobei der Düsenabstand entlang der ersten Richtung definiert ist, und
**dadurch gekennzeichnet, dass** die Steuereinheit (20) im Rahmen der Steuerung dazu ausgelegt ist, wiederholt einen ersten Vorgang auszuführen, bei dem die Druckköpfe (13) relativ entlang der zweiten Richtung bewegt werden, während aus einer beliebigen der Düsen (30) der Druckköpfe (13) Tinte ausgestoßen wird, einen zweiten Vorgang, bei dem das Aufzeichnungsmedium relativ zu den Druckköpfen (13) entlang der ersten Richtung bewegt wird, und einen dritten Vorgang, bei dem das Aufzeichnungsmedium relativ zu den Druckköpfen (13) auf der Grundlage eines Abstands zwischen Düsenenden der Vielzahl von Druckköpfen (13), entlang der ersten Richtung bewegt wird nachdem der Druckvorgang in mindestens einem Teilbereich des Bildes abgeschlossen ist.

2. Die Bilderzeugungsvorrichtung (1) nach Anspruch 1, wobei
die Steuereinheit (20) im Rahmen des zweiten Vorgangs dazu ausgelegt ist, das Aufzeichnungsmedium zu veranlassen, sich relativ zu den Druckköpfen (13) um einen Bewegungsbetrag in der ersten Richtung zu bewegen, der größer oder gleich einem Düsenabstand der Druckköpfe (13) ist.

3. Die Bilderzeugungsvorrichtung (1) nach Anspruch 1, wobei
die Steuereinheit (20) dazu ausgelegt ist, einen Bewegungsbetrag der Relativbewegung des Aufzeichnungsmediums gegenüber den Druckköpfen (13) auf der Grundlage einer Temperaturdifferenz zwischen der Vielzahl von Druckköpfen (13) festzulegen.

4. Die Bilderzeugungsvorrichtung (1) nach Anspruch 1, wobei
die Steuereinheit (20) dazu ausgelegt ist, einen Bewegungsbetrag der Relativbewegung des Aufzeichnungsmediums gegenüber den Druckköpfen (13) auf der Grundlage eines Abstands zwischen einer Ausstoßöffnung der Düsen (30) und dem Aufzeichnungsmedium festzulegen.

5. Bildgebungsverfahren zum Ausführen eines Mehrpassdrucks zum Erzeugen eines Bildes durch mehrfaches relatives Bewegen einer Vielzahl von Druckköpfen (13), wobei jeder Druckkopf (13) eine Düsenreihe (31) mit einer Vielzahl von Düsen (30) aufweist, und eines Aufzeichnungsmediums, wobei das Verfahren umfasst:
Durchführung des Mehrpassdrucks derart, dass benachbarte Pixel, die das Bild bilden, im Verlauf mehrerer Durchgänge durch eine Düsenreihe (31) erzeugt werden, die in einem einzelnen Druckkopf (13) von den Druckköpfen (13) enthalten ist, wobei der Düsenabstand entlang der ersten Richtung definiert ist, und
**dadurch gekennzeichnet, dass** der Mehrpassdruck einen ersten Vorgang umfasst, bei dem die Druckköpfe (13) relativ entlang der zweiten Richtung bewegt werden, während aus einer beliebigen der Düsen (30) der Druckköpfe (13) Tinte ausgestoßen wird, einen zweiten Vorgang, bei dem das Aufzeichnungsmedium relativ zu den Druckköpfen (13) entlang der ersten Richtung bewegt wird, und einen dritten Vorgang, bei dem das Aufzeichnungsmedium relativ zu den Druckköpfen (13) auf der Grundlage eines Abstands zwischen Düsenenden der Vielzahl von Druckköpfen (13), entlang der ersten Richtung bewegt wird nachdem der Druckvorgang in mindestens einem Teilbereich des Bildes abgeschlossen ist.

## Revendications

1. Appareil de formation d'image (1), comprenant :
une pluralité de têtes d'impression (13), chaque tête d'impression (13) comportant une colonne de buses (31) comprenant une pluralité de buses (30), configurées pour former une image sur le support d'enregistrement en éjectant des gouttelettes d'encre à partir de la colonne de buses (31) ; et
une unité de commande (20), configurée pour commander l'exécution d'une impression multipasse consistant à former l'image en déplaçant de manière relative les têtes d'impression (13) et le support d'enregistrement une pluralité de fois le long d'une seconde direction orthogonale à une première direction dans laquelle la pluralité de buses (30) est disposée,
l'unité de commande (20) étant configurée pour commander l'exécution de l'impression multipasse de telle sorte que, dans au moins une partie de l'image, des pixels situés à l'intérieur d'un pas de buse des têtes d'impression (13) soient formés, au cours d'une pluralité de passages, par une colonne de buses (31) comprise dans une seule tête d'impression (13) parmi les têtes d'impression (13), le pas de buse étant disposé dans la première direction, et
**caractérisé en ce que**, dans ladite commande, l'unité de commande (20) est configurée pour répéter une première opération consistant à déplacer de manière relative les têtes d'impression (13) le long de la seconde direction tout en éjectant de l'encre à partir de l'une quelconque des buses (30) des têtes d'impression (13), une deuxième opération consistant à déplacer de manière relative le support d'enregistrement le long de la première direction par rapport aux têtes d'impression (13), et une troisième opération consistant à déplacer de manière relative le support d'enregistrement le long de la première direction par rapport aux têtes d'impression (13) sur la base d'une distance entre des extrémités de buses de la pluralité de têtes d'impression (13) après achèvement de l'impression dans au moins une région partielle de l'image.

2. Appareil de formation d'image (1) selon la revendication 1, dans lequel
dans la deuxième opération, l'unité de commande (20) est configurée pour amener le support d'enregistrement à se déplacer de manière relative par rapport aux têtes d'impression (13) d'une distance de déplacement supérieure ou égale à un pas de buse des têtes d'impression (13) dans la première direction.

3. Appareil de formation d'image (1) selon la revendication 1, dans lequel
l'unité de commande (20) est configurée pour définir une distance de déplacement du mouvement relatif du support d'enregistrement par rapport aux têtes d'impression (13) sur la base d'une différence de température entre la pluralité de têtes d'impression (13).

4. Appareil de formation d'image (1) selon la revendication 1, dans lequel
l'unité de commande (20) est configurée pour définir une distance de déplacement du mouvement relatif du support d'enregistrement par rapport aux têtes d'impression (13) sur la base d'une distance entre un orifice d'éjection des buses (30) et le support d'enregistrement.

5. Procédé de formation d'image destiné à exécuter une impression multipasse pour former une image en déplaçant de manière relative, à plusieurs reprises, une pluralité de têtes d'impression (13), chaque tête d'impression (13) comportant une colonne de buses (31) comprenant une pluralité de buses (30), et un support d'enregistrement, le procédé comprenant :
la réalisation de l'impression multipasse de telle sorte que des pixels adjacents constituant l'image soient formés, au cours d'une pluralité de passages, par une colonne de buses (31) comprise dans une seule tête d'impression (13) parmi les têtes d'impression (13), le pas de buses étant disposé dans la première direction, et
**caractérisé en ce que** l'impression multipasse comprend une première opération consistant à déplacer de manière relative les têtes d'impression (13) le long de la seconde direction tout en éjectant de l'encre depuis l'une quelconque des buses (30) des têtes d'impression (13), une deuxième opération consistant à déplacer de manière relative le support d'enregistrement par rapport aux têtes d'impression (13) le long de la première direction, et une troisième opération consistant à déplacer de manière relative le support d'enregistrement par rapport aux têtes d'impression (13) le long de la première direction sur la base d'une distance entre des extrémités de buses de la pluralité de têtes d'impression (13) après achèvement de l'impression dans au moins une région partielle de l'image.
